# FASCICULE DE BREVET EUROPEEN

(11) **EP 0 715 018 B1**
(45) Date de publication et mention de la délivrance du brevet: **09.09.1998**
(21) Numéro de dépôt: 95402496.4
(22) Date de dépôt: 08.11.1995
(51) Int. Cl.: D21B 1/32, D21F 1/70, B03D 1/24

(54) **Perfectionnements aux dispositifs d'injection d'air dans un flux de pâte à papier pour en opérer le désencrage**
Verbesserungen an Vorrichtungen zum Einblasen von Luft in einem Faserbrei zum Deinken
Improvements in devices for injecting air in a paperstock for deinking

(30) Priorité: 28.11.1994 FR 9414212
(43) Date de publication de la demande: 05.06.1996
(73) Titulaire: E & M LAMORT, F-51300 Vitry le François (FR)
(72) Inventeur: Serres, Alain, F-51100 Reims (FR); Meuret, Alain, F-51300 Vitry le Francois (FR); Colin, Philippe, F-51300 Vitry le Francois (FR)
(74) Mandataire: Loyer, Bertrand

(56) Documents cités:
- EP-A- 0 256 965
- EP-A- 0 305 251
- FR-A- 1 142 527
- US-A- 2 938 629
- US-A- 3 173 827
- US-A- 4 627 922
- US-A- 5 066 389

## Description

Il est connu dans l'industrie de la récupération des pâtes à papier de procéder au désencrage de la pâte de vieux papiers recyclés par insufflage d'air dans ladite pâte.

Dans le brevet européen EP 0 305 251 au nom du demandeur on a décrit un injecteur d'air d'une forme particulière permettant d'insuffler une grande quantité d'air dans une masse de pâte à papier à désencrer et former ainsi un grand nombre de bulles d'air (opération appelée moussage), l'encre contenue dans la pâte ainsi moussée venant se fixer sur les parois des bulles d'air. Il ne reste plus alors qu'à séparer la mousse, chargée d'encre, de la masse semi-liquide constituée d'eau et de pâte à papier.

L'injecteur décrit dans ledit brevet européen EP 0 305 251 est en 3 parties : un ensemble de tubes d'injection de la pâte chargée d'encre; une chambre cylindrique dans laquelle l'air est insufflé tangentiellement; une conduite de mélange comprenant un convergent et divergent reliés l'un à l'autre par une conduite cylindrique.

Cet injecteur donne d'excellents résultats et la présente invention a pour objet la mise en oeuvre d'un tel injecteur.

Un premier aspect de la présente invention est relative à la structure même de cet injecteur, structure simplifiée par rapport à ce qui est décrit dans le brevet EP 0 305 251, ce qui permet de le fabriquer à un moindre coût.

Un deuxième aspect de la présente invention est relative à la façon dont est disposé en tel injecteur dans un appareil de moussage.

L'injecteur selon la présente invention est caractérisé par le fait qu'il est constitué par un tube cylindrique creux dont l'alésage interne comporte : une première partie comprenant un alésage tronconique divergent, un alésage cylindrique et un alésage tronconique convergent; et une deuxième partie constituée par un alésage cylindrique d'un diamètre supérieur à celui de l'alésage tronconique convergent avec lequel il communique, cet alésage cylindrique étant muni, juste avant sa jonction avec l'alésage tronconique d'un perçage tangentiel pour l'introduction de l'air et étant obturé par une pièce munie de perçage pour l'introduction de la pâte.

L'invention concerne également un ensemble d'injection comprenant une pluralité d'injecteurs disposés côte à côte entre deux plaques métalliques et entourés par une paroi constituant avec les deux plaques métalliques un caisson étanche dans lequel est insufflé l'air de moussage.

A tire d'exemple non limitatif et pour faciliter la compréhension de l'invention on a représenté aux dessins annexés :
- figure 1 : une vue en coupe longitudinale d'un exemple de réalisation de l'injecteur selon l'invention;
- figure 2 : une vue en coupe selon AA de la figure 3 d'un caisson étanche comportant une pluralité d'injecteurs selon la figure 1.
- figure 3 : une vue selon BB de la figure 2.
- figure 4 : une vue en plan d'un premier mode de réalisation du bouchon de l'injecteur.
- figure 5 : une vue en coupe selon AA de la figure 4.
- figure 6 : une vue en plan d'un deuxième mode de réalisation du bouchon d'injecteur.
- figure 7 : une vue en coupe selon AA de la figure 6.

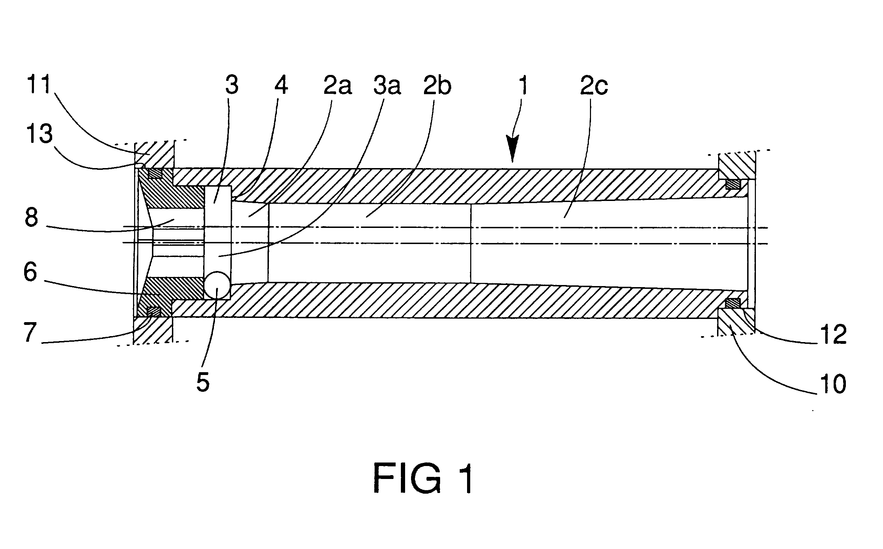

En se reportant à ces figures et plus particulièrement à la figure 1 on voit que selon l'invention l'injecteur désigné par la référence générale 1 est constitué par un tube cylindrique creux.

L'alésage interne du tube 1 comporte une première partie 2 en trois sections, une section 2a convergente, une section 2c divergente et entre les deux une section 2b cylindrique. La section 2c débouche à l'extrémité du tube 1. Cet alésage comporte une deuxième partie 3, qui est un alésage cylindrique allant de l'autre extrémité du tube 1 jusqu'à l'alésage 2a.

L'alésage 3 a un diamètre supérieur à celui de la section 2a de l'alésage 2 ce qui ménage un épaulement 4. Au niveau de cet épaulement 4 le tube 1 est percé par un conduit 5 qui arrive tangentiellement dans l'alésage 3.

L'alésage 3 est fermé par un bouchon 6 muni d'un joint 7. L'épaisseur de ce bouchon est inférieure à la longueur de l'alésage 3 d'une longueur "1" qui est approximativement égale au diamètre du perçage 5, ce qui ménage, au fond de l'alésage 3, une chambre cylindrique d'injection d'air 3a, alimentée tangentiellement par le perçage 5.

Ce bouchon 6 est traversé de part en part par des perçages 8, qui peuvent ou non communiquer entre eux. Ces perçages peuvent être constitués par plusieurs fentes disposées en étoile. Par exemple, en ménageant trois fentes qui se recoupent au centre du bouchon 6 on obtient un perçage constitué par une étoile à six branches.

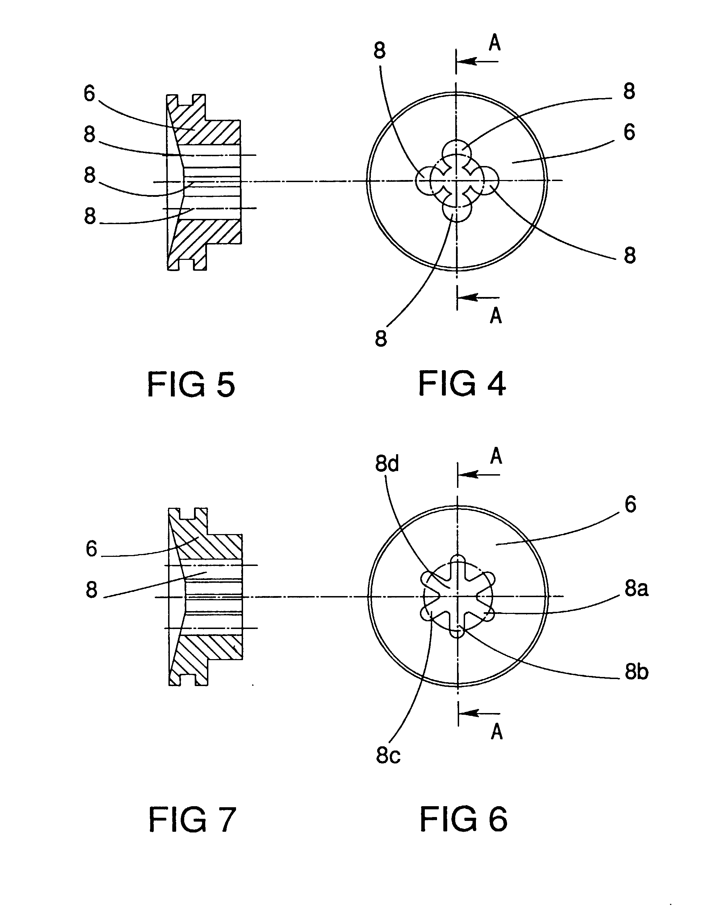

Les figures 4 et 5 représentent un premier mode de réalisation du bouchon 6 destiné à être mis en place dans l'alésage 3 en ménageant dans cet alésage une chambre cylindrique d'injection d'air 3a.

En se reportant à ces figures on voit que le bouchon 6 est percé de cinq perçages 8 : un perçage central et quatre perçages disposés autour dudit perçage central et communiquant avec lui du fait qu'il intersecte.

En se reportant aux figures 6 et 7 on voit que les perçages 8 sont réalisés au moyen de 3 fentes 8a, 8b et 8c qui se croisent, ce qui définit un perçage en étoile avec un orifice plus important 8d au centre, cet orifice ayant pour centre le point géométrique d'intersection des axes des fentes.

Le mode de réalisation des figures 6 et 7 présente l'avantage d'éviter l'accrochage des fibres lors de l'injection.

D'une façon plus générale les perçages 8 sont réalisés de façon à augmenter au maximum la surface de contact entre l'air et la pâte lors de l'injection de l'air. Dans ce but, on ménage à partir d'un orifice central une pluralité d'orifices additionnels disposés tout autour de cet orifice central et communiquant avec lui; ces orifices additionnels pouvant être circulaires comme dans le cas de la figure 4 ou allongés comme dans le cas de la figure 6.

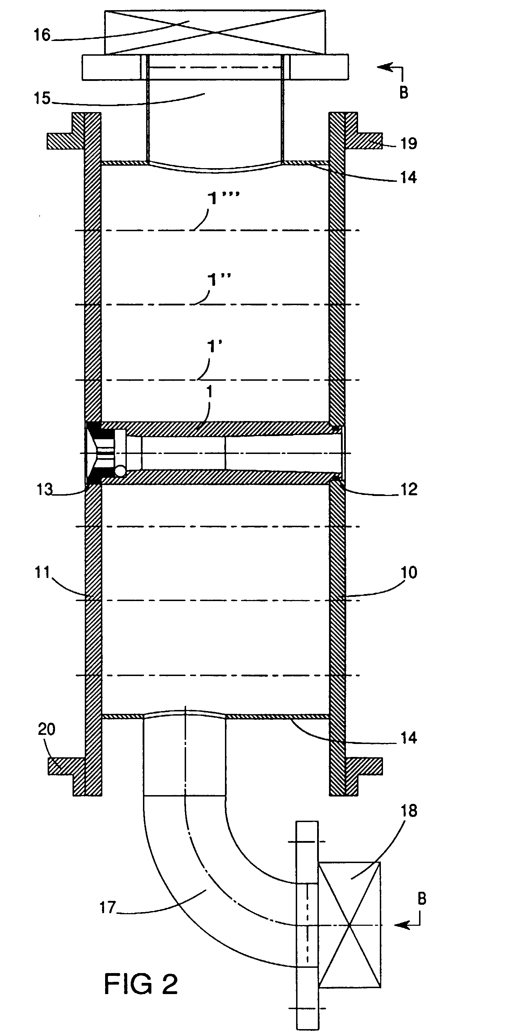

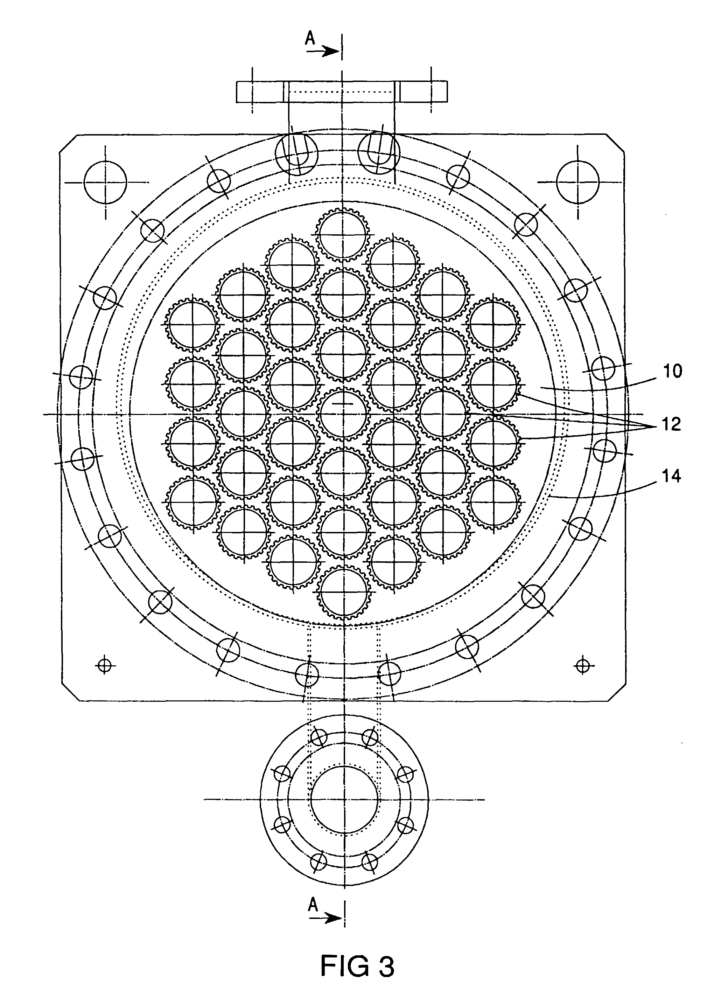

En se reportant aux figures 2 et 3 on voit que l'on dispose côte à côte dans un caisson une pluralité d'injecteurs tels que celui représenté à la figure 1.

Pour cela on dispose les injecteurs entre deux plaques parallèles 10 et 11 percées de trous 12 et 13 appropriés. La plaque 10 est munie de trous 12 dans lequel viennent s'encastrer les extrémités des tubes 1 par où débouche la section divergente 2c de l'alésage 2. La plaque 11 est munie de trous 13 qui reçoivent l'autre extrémité de l'injecteur.

A la figure 1 on a illustré un seul injecteur, mais les traits tiretés 1', 1" etc... représentent schématiquement les autres injecteurs.

Comme cela est représenté à la figure 3 les orifices 12 (et donc les orifices 13 qui y correspondent et les injecteurs qui sont disposés entre deux orifices 12 et 13) sont disposés selon une disposition analogue à celles des tubulures d'une chaudière, les deux plaques 10 et 11 étant reliées l'une à l'autre de façon étanche par une virole circulaire 14.

Les deux plaques 10 et 11 constituent avec la virole 14 un caisson étanche dans lequel sont placés les injecteurs.

Dans cette virole 14 débouchent, d'une part une canalisation d'alimentation en air 15 commandée par une vanne 16 et, une canalisation d'alimentation en eau 17 commandée par une vanne 18.

Le caisson constitué par les deux plaques 10 et 11 et la virole 14 est interposé entre deux chambres 19 et 20 représentées schématiquement sur la figure 2.

La pâte à désencrer est amenée sous pression dans la chambre 20 et passe dans les perçages 8 de chacun des injecteurs. Simultanément, de l'air sous pression est admis par la canalisation 15 dans le caisson (la vanne 18 étant fermée). Cet air sous pression emprunte les perçages tangentiels 5 de chaque injecteur et se trouve ainsi insufflé dans le flux de pâte arrivant par les perçages 8 ; le mélange pâte+air traverse l'injecteur et par l'orifice de la partie 2c débouche dans la chambre 19.

La canalisation en eau 17 permet de nettoyer l'intérieur du caisson lorsque cela est nécessaire.

Comme indiqué au brevet EP 0 305 251 l'air insufflé dans chaque injecteur provoque l'apparition d'un grand nombre de bulles d'air et la disposition d'une multiplicité d'injecteurs dans le caisson 10,11,14 permet de réaliser un moussage particulièrement efficace de la masse de pâte à papier à désencrer.

## Revendications

1. Injecteur d'air pour le moussage d'une masse de pâte à papier devant être désencrée du type comprenant un ensemble de conduits d'injection de pâte (8), un conduit (2) comportant un convergent et un divergent et une chambre d'admission d'air (3a) caractérisé par le fait qu'il est constitué par un tube cylindrique creux (1) dont l'alésage interne comporte : une première partie (2) comprenant un alésage tronconique convergent (2a), un alésage tronconique divergent (2c) reliés par un alésage cylindrique (2b) et une deuxième partie (3) constituée par un alésage cylindrique d'un diamètre supérieur à celui de l'alésage tronconique convergent (2a) avec lequel il communique, cet alésage cylindrique (3) étant muni juste avant sa jonction avec ledit alésage tronconique convergent (2a) d'un perçage tangentiel (5) et étant obturé par un bouchon (6) muni de perçages (8) pour l'introduction de la pâte, l'épaisseur du bouchon (6) étant inférieure à la longueur de l'alésage (3) de façon à ménager une chambre cylindrique d'admission d'air (3a).

2. Dispositif de moussage de pâte à papier à désencrer caractérisé par le fait qu'il est constitué d'une multiplicité d'injecteurs selon la revendication 1 disposés côte à côte dans un caisson étanche alimenté en air.

3. Dispositif selon la revendication 2 dans lequel le caisson est constitué par deux plaques (10 et 11) reliées par une virole (14), le caisson ainsi formé (10,11,14) étant alimenté en air par une conduite (15), les injecteurs étant placés côte à côte de façon analogue aux tubulures d'une chaudière.

4. Dispositif selon la revendication 1 caractérisé par le fait que les perçages (8) du bouchon (6) sont constitués par un perçage central et une pluralité de perçages périphériques intersectant le perçage central de façon à augmenter la surface de contact entre la pâte et l'air.

5. Dispositif selon la revendication 4 caractérisé par le fait que les perçages périphériques (8) sont des perçages circulaires.

6. Dispositif selon la revendication 4 caractérisé par le fait que les perçages périphériques (8) sont réalisés par des fentes.

## Patentansprüche

1. Luftinjektor zum Aufschäumen einer Masse aus Papierbrei, der deinkt werden soll, der Art mit einer Baugruppe von Breieinblaskanälen, wobei ein Kanal (2) einen konvergierenden und einen divergierenden Abschnitt sowie eine Luftzuführkammer (3a) aufweist, dadurch gekennzeichnet, daß der Luftinjektor aus einer hohlen zylindrischen Hülse (1) gebildet ist, deren Innenbohrung einen ersten Abschnitt (2) mit einer konvergierenden kegelstumpfartigen Bohrung (2a) sowie mit einer divergierenden kegelstumpfartigen Bohrung (2c), wobei die beiden Bohrungen über eine zylindrische Bohrung (2b) miteinander verbunden sind, und einen zweiten Abschnitt (3) aufweist, der von einer zylindrischen Bohrung mit einem Durchmesser gebildet wird, der größer als der der konvergierenden kegelstumpfartigen Bohrung (2a), mit der er in Verbindung steht, ist, wobei diese zylindrische Bohrung (3) direkt vor ihrer Verbindung mit der konvergierenden kegelstumpfartigen Bohrung (2a) mit einer Tangentialbohrung (5) versehen und durch einen Stopfen (6) mit Bohrungen (8) zur Einführung des Breis verschlossen ist, und wobei die Dicke des Stopfens (6) kleiner als die Länge der Bohrung (3) ist und zwar derart, daß eine zylindrische Luftzuführkammer (3a) ausgebildet wird.

2. Vorrichtung zum Aufschäumen von Papierbrei zum Deinken, dadurch gekennzeichnet, daß sie aus einer Mehrzahl von Luftinjektoren gemäß Anspruch 1 gebildet wird, die nebeneinander in einem dichten Kasten angebracht sind, der mit Luft beaufschlagt wird.

3. Vorrichtung nach Anspruch 2, in der der Kasten von zwei Platten (10 und 11) gebildet wird, die über einen Ring (14) miteinander verbunden sind, wobei dem so gebildeten Kasten (10,11,14) durch eine Leitung (15) Luft zugeführt wird und die Injektoren nebeneinander in einer den Rohren eines Dampfkessels analogen Weise angeordnet sind.

4. Vorrichtung nach Anspruch 1, dadurch gekennzeichnet, daß die Bohrungen (8) des Stopfens (6) von einer zentralen Bohrung und einer Mehrzahl von peripherisch angebrachten Bohrungen gebildet werden, welche die zentrale Bohrung so schneiden, daß die Kontaktfläche zwischen dem Brei und der Luft vergrößert wird.

5. Vorrichtung nach Anspruch 4, dadurch gekennzeichnet, daß die peripherisch angebrachten Bohrungen (8) Kreisbohrungen sind.

6. Vorrichtung nach Anspruch 4, dadurch gekennzeichnet, daß die peripherisch angebrachten Bohrungen (8) durch Schlitze ausgebildet werden.

## Claims

1. Air injector for foaming a mass of paper stock before it is deinked of the type comprising an assembly of stock injection pipes (8), a pipe (2) having a convergent part and a divergent part and an air intake chamber (3a) characterized in that it consists of a hollow cylindrical tube (1) the internal bore of which includes : a first part (2) comprising a convergent frustoconical bore (2a), a divergent frustoconical bore (2c) connected by a cylindrical bore (2b) and a second part (3) consisting of a cylindrical bore with a diameter greater than that of the convergent frustoconical bore (2a) with which it communicates, this cylindrical bore (3) being provided just before its junction with the said convergent frustoconical bore (2a) with a tangential drilling (5) and being closed by a stopper (6) provided with drillings (8) for introducing the stock, the thickness of the stopper (6) being less than the length of the bore (3) so as to provide a cylindrical air intake chamber (3a).

2. Device for foaming paper stock to be deinked, characterized in that it consists of a multiplicity of injectors according to claim 1 disposed side by side in a leakproof casing supplied with air.

3. Device according to claim 2, wherein the casing consists of two plates (10 and 11) connected by a collar (14), the casing thus formed (10, 11, 14) being supplied with air through a pipe (15), the injectors being placed side by side in a similar manner to the tubes of a boiler.

4. Device according to claim 1, characterized in that the drillings (8) of the stopper (6) consist of a central drilling and a plurality of peripheral drillings intersecting the central drilling so as to increase the contact area between the stock and the air.

5. Device according to claim 4, characterized in that the peripheral drillings (8) are circular drillings.

6. Device according to claim 4, characterized in that the peripheral drillings (8) are made as slits.
